Europäisches Patentamt

(19) European Patent Office

Office européen des brevets

(11). Publication number: **0 018 167**
**B1**

(12) **EUROPEAN PATENT SPECIFICATION**

(45) Date of publication of patent specification: **05.10.83**

(51) Int. Cl.³: **B 29 D 7/02, B 29 D 7/22**

(21) Application number: **80301142.8**

(22) Date of filing: **09.04.80**

(54) Method and apparatus for depositing dusting agent to the inside wall of tubular plastic films.

(30) Priority: **10.04.79 JP 43336/79**

(43) Date of publication of application:
**29.10.80 Bulletin 80/22**

(45) Publication of the grant of the patent:
**05.10.83 Bulletin 83/40**

(84) Designated Contracting States:
**DE FR NL**

(56) References cited:
**BE - A - 669 661**
**US - A - 3 172 930**
**US - A - 3 474 755**

(73) Proprietor: **KUREHA KAGAKU KOGYO KABUSHIKI KAISHA**
**8 Horidome-cho, 1-chome Nihonbashi Chuo-ku Tokyo (JP)**

(73) Proprietor: **KUREHA PLASTICS Co. LTD**
**2221 Oaza-Kamitamari Tamari-mura Niihari-gun Ibaraki-ken (JP)**

(72) Inventor: **Nakano, Toshio**
**18-2 Oaza-Kamitamari Tamari-mura Niihari-gun Ibaraki-ken (JP)**

(74) Representative: **Haigh, Charles Roy et al, J.A. KEMP & CO. 14 South Square Gray's Inn London WC1R 5EU (GB)**

Courier Press, Leamington Spa, England

## Method and apparatus for depositing dusting agent to the inside wall of tubular plastic films

This invention relates to a method of and apparatus for depositing antiblocking agents, so-called dusting agents, to the inside wall of tubular plastic films.

A method and apparatus of this type are disclosed, for example, in U.S. Patent Specification US—A—3,474,755.

The apparatus disclosed in the above U.S. patent specification comprises pairs of cooperating inner and outer rollers provided respectively on the outside and the inside of a tubular plastic film, the rollers being rotated by running of the film engaged between them, and a disc rotated by the rotation of the inner rollers to scatter dusting agents, whereby dusting agents are deposited on the inner wall of the tubular plastic film.

In the apparatus referred to above, however, the weight of dusting agent contained in a reservoir is decreased in the course of application to the inner wall of the tubular film. This changes the pressure of engagement of the rollers with the tubular film which results in slipping of the rollers and uneven rotation in the rotational disc. Such uneven rotation of the disc may possibly hinder uniform deposition of the dusting agents to the inner wall of the tubular film. Furthermore, as the disc is rotated by the pairs of rollers engaging the tubular film between them, these rollers require a considerable rotational force, which necessarily increases the roller-engaging pressure and this may damage the tubular plastic film. The foregoing apparatus is thus not yet quite satisfactory.

This invention has been made in view of the foregoing drawbacks. It is an object of this invention to provide a method of and apparatus for depositing dusting agents to the inner wall of a tubular plastic film, wherein the scattering operation is not influenced by the amount of the dusting agent in a reservoir but can be controlled in response to the changes in the running speed of the tubular film and the dusting agent can be deposited substantially uniformly on the inner wall of the tubular film.

According to the present invention there is provided a method of depositing a dusting agent on an inside wall of a tubular film, by feeding the dusting agent from a reservoir positioned within an internal space defined by the tubular film, as the film moves, and allowing the dusting agent to fall and then scattering it by centrifugal force, characterised by the steps of detecting the speed of movement of the tubular film, generating a signal representative of the detected speed, converting the signal to an optical signal, radiating the optical signal through the tubular film to the internal space, and controlling the amount of dusting agent scattered onto the inside wall of the tubular film by controlling, with the optical signal, a power source located within the internal space and connected to provide the feeding and the centrifugal force.

The invention also provides an apparatus for depositing a dusting agent on an inside wall of a tubular film, including a reservoir to be located within an internal space defined by the tubular film, and means located within said reservoir for feeding the dusting agent so that it falls downwardly out of said reservoir onto means for imparting centrifugal force to the dusting agent, characterised by a detector for detecting the speed of the tubular film, said detector comprising a tachogenerator having an input shaft connected to a rotating shaft of a roller arranged to engage the tubular film, a light emitting diode for radiating an optical signal through the tubular film, means for setting the optical signal according to the detected speed of the film, a receiver for receiving the optical signal emitted from the transmitter and electric motor drive means for said dusting agent feeding means and said scattering means the rotational speed of said drive means being controlled by the signal received by the receiver.

From the Belgian patent specification BE—A—669.661 an apparatus for applying material to the inside wall of a tubular film is known, in which an electric motor is located within the internal space defined by the tubular film, which motor is controlled by a current that is induced from outside the tubular film, and in which signals are passed through the wall of the tubular film, from inside to outside, by means of electric coils.

The invention will be further described by way of non-limitative example with reference to the accompanying drawings, in which:

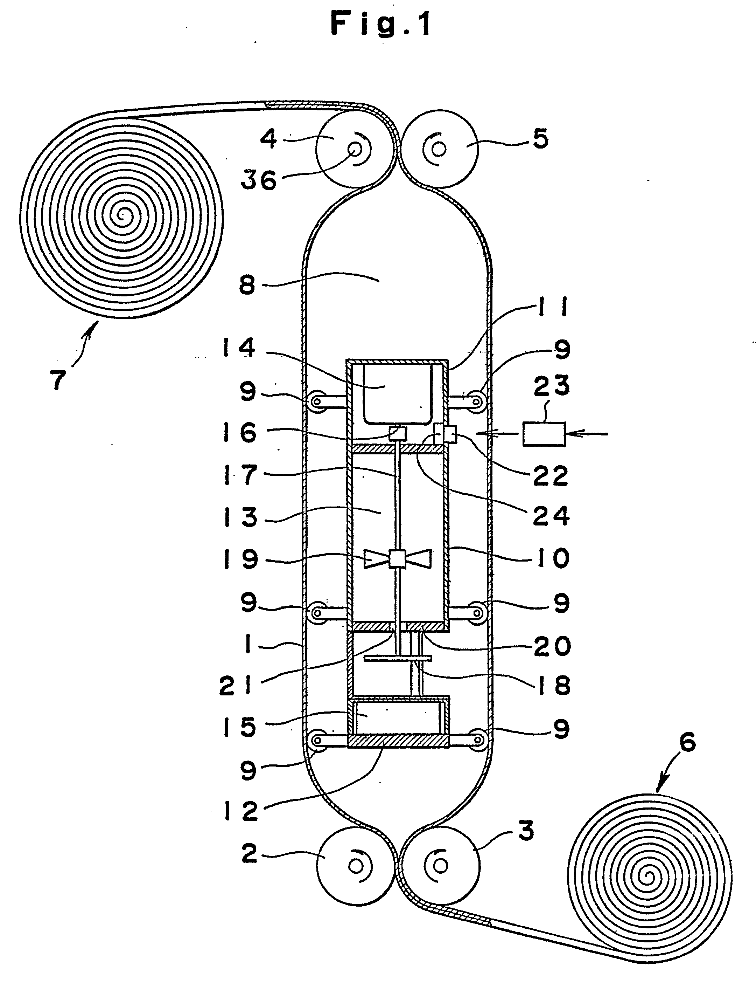

Fig. 1 is an explanatory view of a preferred embodiment of an apparatus for carrying out the method of this invention;

Fig. 2 is a block diagram showing the electrical control in the embodiment in Fig. 1;

Fig. 3 is a partial circuit diagram of a preferred embodiment of the controller and setting means shown in Fig. 2; and

Fig. 4 is a partial explanatory view of another preferred embodiment for carrying out the method of this invention.

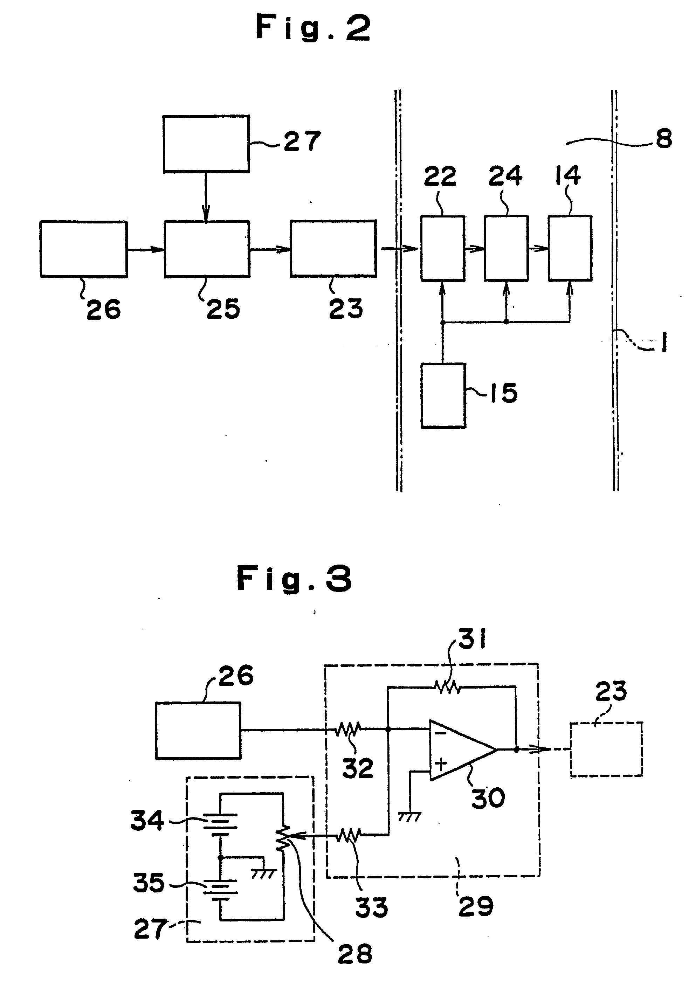

In the drawings, a transparent tubular plastic film 1 is pinched between upstream rollers 2, 3 and between downstream rollers 4, 5 and sent from a delivery roll 6 to a take-up roll 7. On the side of the rollers 4, 5, is usually connected an electric motor (not shown) as a driving means by which the rollers 4, 5 are rotated to pull and run the film 1. An internal space, that is, a chamber 8 of the film 1 defined between the rollers 2, 3 and 4, 5 is filled with air, which is tightly sealed against external leakings by the rollers 2, 3 and the rollers 4, 5 that respectively pinch the film 1 between each pair of them. In the air-filled chamber 8, are disposed a reservoir 10 for a dusting agent, a motor support frame 11 and a cell bed 12 each being supported by rollers 9 that abut against the inner wall of the film 1. These reservoir 10, frame 11 and the bed 12 are connected to each other as an integral structure. A dusting agent 13 is contained in the reservoir 10. A DC motor 14 is secured to the frame 11 and the cell 15 is mounted on the bed 12. A shaft 17 connected to the output shaft 16 of the motor 14 extends through the reservoir 10, projects from the bottom of the reservoir 10, and has attached at the bottom end thereof a disc 18. The shaft 17 has a blade 19 for agitating the dusting agent in the reservoir 10. Between the periphery of the shaft 17 and the cover 20 at the bottom of the reservoir 10, is formed an annular gap 21, through which the dusting agent 13 falls onto the disc 18 by the rotation of the blade 19 caused by the rotation of the shaft 17. The blade 19, gap 21 and disc 18, constitute a means for successively scattering the dusting agent. A photo-transistor 22 provided on the frame 11 as a receiver receives light radiated as a signal from a light emitting diode or a lamp 23 provided as a transmitter outside the chamber 8, passing through the film 1. A motor drive circuit 24 provided in the chamber 8 and supported on the frame 11 and the like controls and drive the motor 14 according to the intensity of the signal received by the photo-transistor 22. The drive circuit 24 is adapted in such a way that it applied a higher voltage to the motor 14 for rotating the motor 14 faster when the intensity of the light applied to the photo-transistor 22 is higher, and applies a lower voltage to the motor 14 for rotating the motor 14 slower when the intensity of the light applied to the photo-transistor 22 is lower. Electric power is supplied from the cell 15 to each of the photo-transistor 22, drive circuit 24 and motor 14 for operating them in predetermined manner. The lamp 23 is actuated by a setting means 25 (Fig. 2) provided outside of the chamber 8 and the intensity of the light to be emitted as the signal from the lamp 23 is set by the setting means 25. The setting means 25 is adapted to set the intensity of the light produced from the lamp 23 depending on the sending speed signal obtained from a tachogenerator 26 which detects the speed of the tubular film 1. The setting means 25 is adapted, for example, in such a manner that it drives the lamp 23 to produce more intense light when the voltage from the tachogenerator 26 is higher, that is, when the film 1 is moving at a higher speed and, while on the other hand, drive the lamp 23 to produce less light when the voltage generated by tachogenerator 26 is lower, that is, when the speed of film 1 is lower. The setting means 25 is further adapted such that it can set the intensity of light from the lamp 23 also by the signal from an adjusting means 27. For instance, if the lamp 23 cannot be driven to produce a predetermined level of light by the voltage generated from the tachogenerator 26, the adjusting means 27 is adjusted to generate and add an appropriate voltage to the voltage generated from the tachogenerator 26, so that the lamp 23 can produce the light at a predetermined intensity. Such a circuit is shown in Fig. 3, in which the adjusting means 27 can be constituted by a potentiometer 28 and the setting means 25 can be constituted by an adder 29 for adding the voltage adjusted by the potentiometer 28 to the voltage generated from the tachogenerator 26. In Fig. 3, numeral 30 is an operational amplifier, numerals 31, 32 and 33 are resistors and numerals 34 and 35 are power supplies. The tachogenerator 26 is connected at its input shaft, for example, to the rotating shaft 36 of the roller 4 so that the rotating speed of the roller 4 or 5 can be detected.

The operation of the apparatus for depositing the dusting agent having the foregoing constitution will now be described. At first, driven by the rollers 4, 5, the film 1 is advanced from the delivery roll 6 to the take-up roll 7. Upon rotation of the roller 4, the tachogenerator 26 generates a detection voltage corresponding to the rotational speed of the roller 4. In this way, the tachogenerator 26 detects the speed of the film 1. The setting means 25 drives the lamp 23 to produce light depending on the voltage from the tachogenerator 26. The light produced from the lamp 23 passes through the film 1 to the chamber 8 and the light in the chamber 8 is received by the phototransistor 22, which converts the received light into an electric signal and supplies it to the drive circuit 24. The drive circuit 24 controls the motor 14 in accordance with the electric signal, by which the output shaft 16 of the motor 14 is rotated and the shaft 17 is also rotated. Upon rotation of the shaft 17, the blade 19 and the disc 18 are rotated, and the dusting agent 13 in the reservoir 10 is agitated by the rotation of the blades 19 and gradually falls through the gap 21 onto the disc 18 from which it is radially scattered by the rotation of the disc 18 and successively deposited to the inner wall of the film 1.

When the rotational speed of the roller 4 is increased by any cause, the speed detection voltage obtained from the tachogenerator 26 increases and, therefore, the setting means 25 increases the brightness of lamp 23. Accordingly, the intensity of the light passing through the film 1 into the chamber 8 and received by the photo-transistor 22 is also increased and the drive circuit 24 supplied with the signal from the photo-transistor 22 applies a higher voltage to the motor 14 for rotating the motor 14 faster. Since the motor 14 is rotated at a higher speed and, as a result, the shaft 17 and the blades 19 are also rotated faster, the dusting agent 13 is rapidly agitated to increase the amount of the dusting agent falling through the gap 21 per unit time and, since the disc 18 is also rotated at a higher speed, the dusting agent falling on the disc 18 is scattered at a higher speed and deposited on the inner wall of the film 1 at a higher speed. On the other hand, when the rotating speed of the roller 4 is decreased by any cause, the detection voltage obtained from the tachogenerator 26 falls and the setting means 25 drives the lamp 23 to produce less light. The intensity of the light produced from the lamp 23 is decreased and, accordingly, the intensity of the light irradiated through the film 1 into the chamber 8 and received by the photo-transistor 22 is also decreased. Thus, the drive circuit 24 applies a lower voltage to the motor 14 for rotating the motor 14 slower. Since the motor 14 is rotated at a lower speed, the amount of the dusting agent falling through the gap 21 per unit time is decreased and the dusting agent 13 falling on the disc 18 is scattered at a lower speed and deposited on the inner wall of the film 1 since the disc 18 is also rotated at a lower speed.

When no appropriate amount of deposition can be obtained at a predetermined sending speed of the film 1, the voltage supplied from the cell 15 is not at a predetermined voltage, or the intensity of the light emitted from the lamp 23 or received by the photo-transistor 22 is not a predetermined value or the like, the potentiometer 28 can be adjusted so that an appropriate amount of deposition can be obtained eventually.

By applying both a voltage controlled by the potentiometer 28 and the voltage generated from the tachogenerator 26 to the adder 29, a predetermined voltage can be obtained in an equivalent manner at the output of the adder 29.

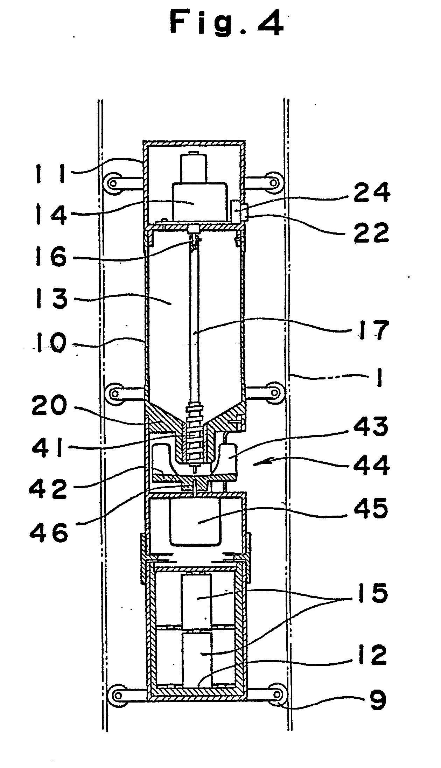

Another preferred embodiment of the apparatus for carrying out the method of this invention is described referring to Fig. 4. In the embodiment shown in Fig. 4, means for scattering the dusting agent by the rotation of the motor comprises spirally threaded grooves 41 formed on the shaft 17 and a vane 44 having a disc 42 mounted with a plurality of vertical blades 43. the vane 44 may be connected for rotation with the shaft 17, or the vane 44 may be connected to the output shaft 46 of a separate motor 45 and rotated by the rotation of the shaft 46. In this case, the motor 45 is desirably adapted, as is the motor 14, to be driven by the drive circuit 24 so as to control the rotating speed of the output shaft 46. The same operation as above can also be obtained by the provision of such means for scattering the dusting agent and, in addition, the dusting agent falling on the disc 42 can be surely and exactly controlled according to the rotational speed of the shaft 17 by means of helically threaded groove 41 and the falling dusting agent can be uniformly scattered by the blades 43 to accomplish uniform deposition of the dusting agent to the inside wall of the film 1.

While the information indicating the film speed is sent by the emitted signal by the changes in the intensity of the light produced from the lamp in the foregoing embodiment, the information for the sending speed can be incorporated in the signal also by intermittently turning ON and OFF the lamp and varying the intermittent period. This can be realised preferably, for example, by providing the means 25 with a voltage-frequency converter to convert the continuous voltage signal from the tachogenerator 26 into a series of pulse signals and intermittently turning ON and OFF a light emitting diode, preferably, instead of the lamp 23 and, while on the other hand, by providing a frequency-voltage converter in the drive circuit 24 to convert the series of pulse signals obtained from the photo-transistor 22 into a continuous voltage signal to control the motor 14. Incorporating the information for the sending speed as the changes in the frequency into the signal thus emitted the apparatus can be operated with no influence from the light of other light sources and, accordingly, shielding, against other light sources is unnecessary for the apparatus.

While a tachogenerator is used as the detector in the foregoing embodiment, it can be substituted with a detector using a pulse disc or the like adapted to issue a series of pulses in accordance with the rotation of the roller, with which digital-analog converter can be used if required. In addition, although the rotating speed of the roller had been detected to detect the speed of the film 1, the speed of the film can be detected directly.

Since the amount of the dusting agent can be controlled in response to the speed of the film, the dusting agent can be deposited on the inside wall of the film approximately uniformly and, since the number of positions for pinching the film between rollers can be decreased, damage to the film can be reduced. In addition, since the deposition of the dusting agent is not influenced by the amount of the agent in the reservoir, uniform deposition can be obtained. Furthermore, since the amount deposited can optionally be set externally, if the stationary deposition amount is changed by some causes, the deposition can be set to a predetermined amount without taking out the reservoir or the like from the inside of the film.

**Claims**

1. A method of depositing a dusting agent (13) on an inside wall of a tubular film (1), by feeding the dusting agent from a reservoir (10) positioned within an internal space (8) defined by the tubular film (1), as the film moves, and allowing the dusting agent (13) to fall and then scattering it by centrifugal force, characterised by the steps of detecting the speed of movement of the tubular film (1), generating a signal representative of the detected speed, converting the signal to an optical signal, radiating the optical signal through the tubular film (1) to the internal space (8), and controlling the amount of dusting agent (13) scattered onto the inside wall of the tubular film (1) by controlling, with the optical signal, a power source (14) located within the internal space (8) and connected to provide the feeding and the centrifugal force.

2. An apparatus for depositing a dusting agent (13) on an inside wall of a tubular film (1), including a reservoir (10) to be located within an internal space (8) defined by the tubular film (1), and means (17, 19, 41) located within said reservoir for feeding the dusting agent (13) so that it falls downwardly out of said reservoir onto means (18, 42) for imparting centrifugal force to the dusting agent (13), characterised by a detector (26) for detecting the speed of the tubular film (1), said detector comprising a tachogenerator (26) having an input shaft connected to a rotating shaft (36) of a roller (4) arranged to engage the tubular film, a light emitting diode (23) for radiating an optical signal through the tubular film, means (25) for setting the optical signal according to the detected speed of the film, a receiver (22) for receiving the optical signal emitted from the transmitter (23) and electric motor drive means (14; 14, 45) for said dusting agent feeding means (17, 19, 41) and said scattering means (18, 42), the rotational speed of said drive means being controlled by the signal received by the receiver (22).

3. Apparatus according to claim 2, characterised in that the light emitting diode (23) is operated by a continuous voltage signal.

4. Apparatus according to claim 2, characterised in that the light emitting diode (23) is operated by a pulse signal.

5. Apparatus according to claim 2, 3 or 4, characterised in that the means for feeding and scattering the dusting agent (13) comprises a blade (19) for agitating the dusting agent and a disc (18) for receiving the dusting agent which is agitated and supplied by the blade.

6. Apparatus according to claim 2, 3 or 4, characterised in that the means for feeding the dusting agent (13) comprises a shaft (17) having a helically threaded groove (41) and a disc (42) for receiving the dusting agent supplied through the groove.

7. Apparatus according to claim 5 or 6, characterised in that one motor (14) is provided and an output shaft (16) thereof is connected to the blade (19) or shaft (17) having the threaded groove (41) and to the disc (18).

8. Apparatus according to claim 5 or 6, characterised in that two motors (14, 45) are provided, an output shaft (16) of one motor (14) being connected to the blade (19) or shaft (17) having the threaded groove (41) and an output shaft (46) of the other motor (45) being connected to the disc (42).

9. Apparatus according to any one of claims 5 to 7, wherein a blade (43) is provided on the disc (42).

**Revendications**

1. Procédé de dépôt d'un agent de saupoudrage (13) sur la paroi interne d'un film tubulaire (1) par alimentation en agent de saupoudrage à partir d'un réservoir (10) placé au sein d'un espace intérieur (8) délimité par le film tubulaire (1), lors du déplacement du film, et en laissant tomber l'agent de saupoudrage (13) puis en le dispersant par force centrifuge, caractérisé par les étapes de détection de la vitesse du mouvement du film tubulaire (1), création d'un signal représentatif de la vitesse détectée, conversion du signal en un signal optique, émission du signal optique à travers le film (1) vers l'espace interne (8), et commande de la quantité d'agent de saupoudrage (13) dispersée sur la paroi interne du film tubulaire par commande à l'aide du signal optique, d'une source de puissance (14) située au sein de l'espace interne (8) et raccordée de façon à procurer l'alimentation et la force centrifuge.

2. Dispositif de dépôt d'un agent de saupoudrage (13) sur la paroi interne d'un film tubulaire (1) comprenant un réservoir (10) situé au sein d'un espace intérieur (8) délimité par le film tubulaire (1) et des moyens (17, 19, 41) situés à l'intérieur de ce réservoir pour alimenter l'agent de saupoudrage (13) de telle sorte qu'il tombe vers le bas hors de ce réservoir sur des moyens (18, 42) pour impartir une force centrifuge à l'agent de saupoudrage (13), caractérisé par un détecteur (26) pour détecter la vitesse du film tubulaire (1), ce détecteur comprenant un générateur tachymétrique (26) possédant un arbre d'entrée relié à un arbre rotatif (36) d'un cylindre (4) disposé pour venir au contact du film tubulaire, une diode émettrice de lumière (23) pour émettre un signal optique à travers le film tubulaire, des moyens (25) pour régler le signal optique en fonction de la vitesse détectée du film un récepteur (22) pour recevoir le signal optique émis par le transmetteur (23) et des moyens d'entraînement d'un moteur électrique (14; 14, 45) des moyens d'alimentation (17, 19, 41) en agent de saupoudrage et les moyens de dispersion (18, 42), la vitesse de rotation de ce moyen d'entraînement étant commandée par le signal reçu par le receveur (22).

3. Dispositif suivant la revendication 2, caractérisée en ce que la diode émettrice de lumière (23) est mise en fonctionnement par un signal en tension continue.

4. Dispositif suivant la revendication 2, caractérisé en ce que la diode émettrice de lumière (23) est mise en fonctionnement par un signal d'impulsions.

5. Dispositif suivant la revendication 2, 3 ou 4, caractérisé en ce que les moyens d'alimentation et de dispersion de l'agent de saupoudrage (13) comprend une pale (19) pour agiter l'agent de saupoudrage et un disque (18) pour recevoir l'agent de saupoudrage qui est agité et fourni par la lame.

6. Dispositif suivant la revendication 2, 3 ou 4, caractérisé en ce que le moyen d'alimentation en agent de saupoudrage (13) comprend un arbre (17) possédant un sillon fileté en hélice (41), et un disque (42) pour recevoir l'agent de saupoudrage alimenté par le sillon.

7. Dispositif suivant la revendication 5 ou 6, caractérisé en ce qu'il est prévu un moteur (14) et un arbre de sortie (16) de ce moteur et relié à la pale (19) ou à l'arbre (17) possédant le sillon fileté (41) et au disque (18).

8. Dispositif suivant la revendication 5 ou 6, caractérisé en ce que sont prévus deux moteurs (14, 45), un arbre de sortie (16) du moteur (14) étant relié à la pale (19) ou à l'arbre (17) possédant le sillon fileté (41) et un arbre de sortie (16) de l'autre moteur (45) étant relié au disque (42).

9. Dispositif suivant l'une quelconque des revendications 5 à 7, dans lequel une pale (43) est disposée sur le disque (42).

**Patentansprüche**

1. Verfahren zum Aufbringen eines Bestäubungsmittels (13) auf eine Innenwand einer schlauchförmigen Folie durch Zuführen des Bestäubungsmittels bei sich bewegender Folie von einem in einem von der schlauchförmigen Folie (1) begrenzten Innenraum (8) untergebrachten Vorratsbehälter (10) und durch Herabfallenlassen des Bestäubungsmittels (13) sowie dessen anschliessendes Zerstreuen durch Zentrifugalkraft, dadurch gekennzeichnet, dass die Bewegungsgeschwindigkeit der schlauchförmigen Folie (1) erfasst, ein die erfasste Geschwindigkeit wiedergebendes Signal erzeugt, das Signal in ein optisches Signal umgewandelt, das optische Signal durch die schlauchförmige Folie (1) in den Innenraum (8) ausgestrahlt und die Menge des auf die Innenwand der schlauchförmigen Folie (1) zerstreuten Bestäubungsmittel (13) durch Regeln einer innerhalb des Innenraumes (8) angeordneten und die Zufuhr sowie die Zentrifugalkraft besorgenden Energiequelle (14) mit dem optischen Signal gesteuert wird.

2. Vorrichtung zum Aufbringen eines Bestäubungsmittels (13) auf die Innenwand einer schlauchförmigen Folie (1) mit einem in einem von der schlauchförmigen Folie (1) begrenzten Innenraum (8) anzuordnenden Vorratsbehälter (10) und mit im Vorratsbehälter untergebrachten Einrichtungen (17, 19, 41) für die Zufuhr des Bestäubungsmittels (13), so daß es aus dem Vorratsbehälter auf eine dem Bestäubungsmittel (13) eine Zentrifugalkraft vermittelnde Einrichtung (18, 42) herabfällt, gekennzeichnet durch eine die Geschwindigkeit der schlauchförmigen Folie (1) erfassende Meß-zelle (26), die einen Tachogenerator (26) mit einer an die Drehwelle (36) einer zur Anlage an der schlauchförmigen Folie angeordneten Rolle (4) angeschlossene Eingangswelle umfaßt, durch eine ein optisches Signal durch die schlauchförmige Folie ausstrahlende Leuchtdiode (23), durch eine das optische Signal in Übereinstimmung mit der erfaßten Geschwindigkeit der Folie einstellende Einrichtung (25), durch einen das vom Geber (23) ausgesandte optische Signal aufnehmenden Empfänger (22) und durch einen Elektromotorantrieb (14; 14, 15) für die Zufuhreinrichtung (17, 19; 41) sowie die Zerstreueinrichtung (18, 42) des Bestäubungsmittels, wobei die Drehzahl des Antriebs durch das vom Empfänger (22) aufgenommene Signal gesteuert wird.

3. Vorrichtung nach Anspruch 2, dadurch gekennzeichnet, daß die Leuchtdiode (23) durch ein stetes Spannungssignal betrieben wird.

4. Vorrichtung nach Anspruch 2, dadurch gekennzeichnet, daß die Leuchtdiode (23) durch ein Impulssignal betrieben wird.

5. Vorrichtung nach Anspruch 2, 3 oder 4, dadurch gekennzeichnet, daß die Zufuhr- sowie Zerstreueinrichtung des Bestäubungsmittels (13) einen Flügel (19) zum Durchrühren des Bestäubungsmittels und eine Scheibe (18) zur Aufnahme des vom Flügel durchgerührten sowie zugeführten Bestäubungsmittels umfaßt.

6. Vorrichtung nach Anspruch 2, 3 oder 4, dadurch gekennzeichnet, daß die Zufuhreinrichtung des Bestäubungsmittels (13) eine Welle (17) mit einer schraubenförmig eingeschnittenen Nut (41) sowie eine das durch die Nut zugeführte Bestäubungsmittel aufnehmende Scheibe (42) umfaßt.

7. Vorrichtung nach Anspruch 5 oder 6, dadurch gekennzeichnet, daß ein einziger Motor (14) vorgesehen und eine Abtriebswelle (16) des Motors mit dem Flügel (19) oder der die eingeschnittene Nut (41) enthaltenden Welle (17) sowie mit der Scheibe (18) verbunden ist.

8. Vorrichtung nach Anspruch 5 oder 6, dadurch gekennzeichnet, daß zwei Motoren (14, 45) vorgesehen sind und daß eine Abtriebswelle (16) des einen Motors (14) mit dem Flügel (19) oder der die eingeschnittene Nut (41) enthaltenden Welle (17) und eine Abtriebswelle (46) des anderen Motors (45) mit der Scheibe (42) verbunden sind.

9. Vorrichtung nach einem der Ansprüche 5 bis 7, dadurch gekennzeichnet, daß an der Scheibe (42) ein Flügel (43) vorgesehen ist.

# Fig.1

# Fig. 2

# Fig. 3

# Fig. 4